Europäisches Patentamt

European Patent Office

Office européen des brevets

(19)

(11) Veröffentlichungsnummer: **0 258 677 B1**

# EUROPÄISCHE PATENTSCHRIFT

(12)

(45) Veröffentlichungstag der Patentschrift: 08.05.91

(51) Int. Cl.⁵: **H02K 11/00, H02K 23/66**

(21) Anmeldenummer: 87111432.8

(22) Anmeldetag: 07.08.87

(54) **Tragplatte zum Einbau in einen Elektromotor.**

(30) Priorität: 30.08.86 DE 3629634

(43) Veröffentlichungstag der Anmeldung:
09.03.88 Patentblatt 88/10

(45) Bekanntmachung des Hinweises auf die
Patenterteilung:
08.05.91 Patentblatt 91/19

(84) Benannte Vertragsstaaten:
**ES FR GB IT SE**

(56) Entgegenhaltungen:
DE-A- 2 853 905      DE-B- 2 813 956
FR-A- 2 019 175      FR-A- 2 346 875
FR-A- 2 463 990      GB-A- 2 044 552
GB-A- 2 140 218

(73) Patentinhaber: **SWF Auto-Electric GmbH**
**Stuttgarter Strasse 119 Postfach 135**
**W-7120 Bietigheim-Bissingen(DE)**

(72) Erfinder: **Walther, Bernd**
**Birkenweg 20**
**W-7120 Bietigheim-Bissingen(DE)**

## Beschreibung

Die Erfindung geht aus von einer Tragplatte aus elektrisch isolierendem Material, die zum Einbau in einen Elektromotor vorgesehen ist und die Merkmale aus dem Oberbegriff des Anspruchs 1 aufweist.

Eine solche Tragplatte ist durch das DE-GM 79 06 312 bekannt. Auf der Tragplatte sind Köcher für geradlinig verschiebbare Kohlebürsten befestigt, die nach dem Zusammenbau des Elektromotors von Federn gegen den Kollektor des Motorankers gedrückt werden. Auf der Tragplatte sind darüberhinaus zwei Drosseln und ein Kondensator befestigt, die der Funkentstörung des Elektromotors dienen. Des weiteren sitzt auf der Tragplatte ein Thermoschalter, der bei einer zu starken Erhitzung der Elektromotors dessen Stromkreis unterbricht.

Alle genannten elektrischen Bauteile sind nebeneinander und sehr eng auf der Tragplatte angeordnet.

Eine Tragplatte mit den Merkmalen aus dem Oberbegriff des Anspruchs 1 ist auch aus der DE-A-2 853 905 bekannt. Die Tragplatte setzt sich hier aus zwei identischen Hälften zusammen, von denen jede eine Aufnahme für eine Drossel und eine Aufnahme für einen Thermoschalter aufweist. Die beiden Aufnahmen für die Drosseln und die beiden Aufnahmen für die Thermoschalter sind jeweils zweizählig symmetrisch bezüglich der Achse der Tragplatte angeordnet, die mit der Drehachse des Motorankers zusammenfällt.

Wie bei der Tragplatte nach dem DE-GM-7 906 312 befinden sich auch bei der Tragplatte nach der DE-A-2 853 905 die Aufnahmen, in Richtung der Achse betrachtet, nebeneinander.

Aus der DE-AS 28 13 956 ist es bekannt, in einem Elektromotor zwei Drosseln und einen Kondensator in Richtung der Drehachse des Ankers übereinanderliegend anzuordnen. Die beiden Bauteile sind auf einer

Bürstenbrücke befestigt, die in eine Öffnung im Gehäusemantel des Elektromotors eingesetzt ist und auf deren Innenseite die Drosseln und der Kondensator nebeneinander liegen.

Einstückig an die Bürstenbrücke ist ein Steckergehäuse angeformt, das eine Öffnung im Deckel des Gehäuses durchgreift. Die Drosseln und der Kondensator befinden sich über der Innenseite des Steckergehäuses und beanspruchen auf dieser Seite in Achsrichtung des Elektromotors sehr viel Platz.

Der Erfindung liegt die Aufgabe zugrunde, eine Tragplatte mit den Merkmalen aus dem Oberbegriff des Anspruchs 1 so weiterzubilden, daß eine sehr platzsparende Anordnung der elektrischen Bauteile, wie Drossel, Kondensator oder Thermoschalter, möglich ist.

Diese Aufgabe wird erfindungsgemäß dadurch gelöst, daß bei einer Tragplatte mit den Merkmalen aus dem Oberbegriff des Anspruchs 1 zwei Aufnahmen, senkrecht zur Tragplatte betrachtet, übereinanderliegen, und daß sich die eine Aufnahme auf der einen Seite und die andere Aufnahme auf der anderen Seite der Tragplatte befindet. Dadurch wird weder auf der einen Seite noch auf der anderen Seite der Tragplatte zu viel Platz gebraucht.

Vorteilhafte Ausgestaltungen der Erfindung kann man den Unteransprüchen 2 bis 9 entnehmen.

Eine in axialer Richtung besonders kompakte Bauweise kann man erhalten, wenn gemäß Anspruch 2 die Tragplatte in dem Bereich, in dem die beiden Bauteile angeordnet sind, einen Durchbruch aufweist. Im Bereich dieses Durchbruchs können sich die beiden Bauteile in ganz geringem Abstand voneinander befinden, oder sich sogar berühren. Insbesondere ist dies möglich, wenn ein Bauteil eine gekrümmte Außenkontur hat, wie z.B. eine Drossel. Denn dann kann das Bauteil weit in den Durchbruch hinein oder durch ihn hindurchragen und trotzdem von Vorsprüngen der Tragplatte noch teilweise übergriffen werden, so daß ein fester Halt sichergestellt ist.

Sind an der Tragplatte durch Haltemittel Aufnahmen für die elektrischen Bauteile gebildet, so ist ein fester Sitz der Bauteile gewährleistet, der während der Montage das Verbinden der Anschlußdrähte erleichtert und auch durch Erschütterungen des Motors nicht gelockert wird. Die Aufnahmen sowie die Befestigung der Bauteile darin werden vorteilhafterweise entsprechend den Merkmale aus den Unteransprüchen 4 bis 7 gestaltet.

Ein erfindungsgemäßes Ausführungsbeispiel einer Bürstentragplatte sowie ein Teil eines Elektromotors, in dem die Bürstentragplatte verwendet wird, sind in den Zeichnungen dargestellt. Anhand der Figuren dieser Zeichnungen soll die Erfindung nun näher erläutert werden. Es zeigen:

Fig. 1    eine unbestückte Bürstentragplatte aus Kunststoff mit jeweils zwei Aufnahmen für eine Drossel und einen Thermoschalter in einer axialen Ansicht,

Fig. 2    einen Schnitt entlang der Linie II-II aus Fig. 1,

Fig. 3    eine Ansicht der Bürstentragplatte aus Fig. 1 in entgegengesetzter Richtung,

Fig. 4    eine Ansicht gemäß Fig. 1 auf die bestückte und am Gehäusedeckel befestigte Bürstentragplatte,

Fig. 5    einen Schnitt entlang der Linie V-V aus Fig. 4,

Fig. 6    eine Teilansicht des Gehäusemantels, an dem die in den Fig. 4 und 5 gezeigte Baueinheit aus Deckel und Bürstentragplatte montiert werden kann, und

Fig. 7    einen Teilschnitt durch die Bürstentragplatte an einer Stelle, an der ein Rohrniet in ihr befestigt ist.

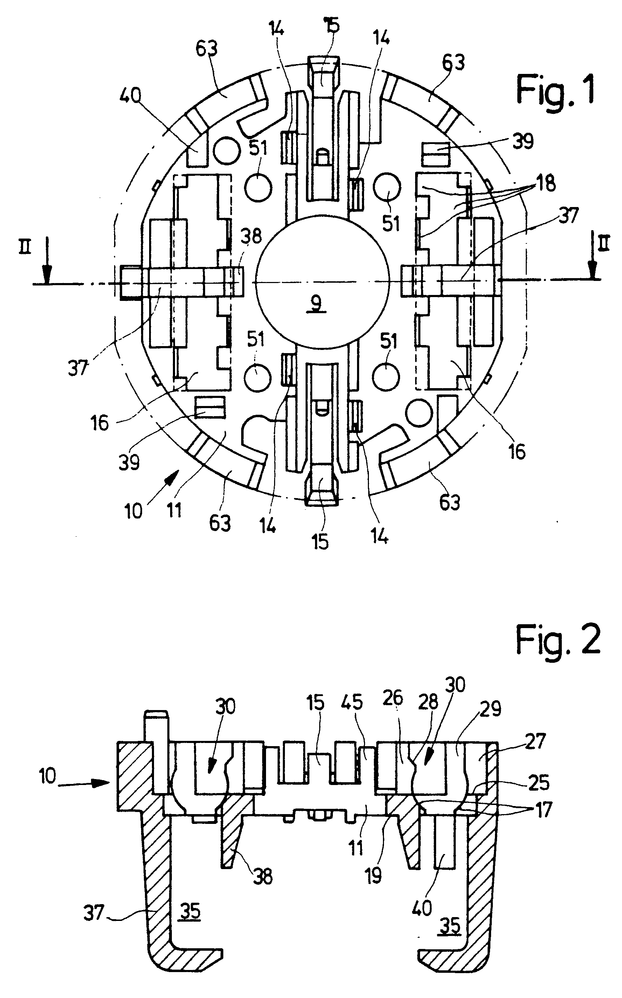

Die in den Figuren dargestellte Bürstentragplatte 10 ist eine ebene Scheibe 11, die mit einer Reihe von Durchbrüchen versehen ist und von der an beiden Seiten verschiedene Ansätze hochstehen. Insgesamt ist die Bürstentragplatte 10 einstükkig aus Kunststoff gespritzt. Die Scheibe 11 hat eine zentrale Aussparung 9, in der sich bei zusammengebautem Elektromotor der Kollektor des Motorankers befindet. An zwei diametral gegenüberliegenden Stellen können auf der Bürstentragplatte 10 zwei metallische Köcher 12 mit darin geführten Kohlebürsten 13 befestigt werden. Dazu werden zwei Lappen an jedem Köcher 12 durch zwei Schlitze 14 in der Scheibe 11 in Richtung der Draufsicht nach Fig. 1 hindurchgesteckt und hinter der Scheibe 11 verbogen. Mit den beiden Federn 15, können die Kohlebürsten in den Köchern in einer Montagestellung arretiert werden, die bei der Montage nach der Durchführung des Kollektors durch die Aussparung 12 gelöst wird. Um 90° gegen die Arretierungsfedern 15 versetzt und einander diametral gegenüberliegend besitzt die Bürstentragplatte 10 in ihrer Scheibe 11 zwei längliche Aussparungen 16, deren Längsrichtung mit der Längsrichtung der Arretierungsfedern 15 und mit der Längsrichtung der auf der Bürstentragplatte 10 montierten Köcher 12 übereinstimmt. Innerhalb der Scheibe 11 wird ein Durchbruch 16 an seinen Längskanten durch zylindrische Wandabschnitte 17 begrenzt, die aus werkzeugtechnischen Gründen in den Abschnitten 18 unterbrochen sind und sich an der Stirnseite 19 der Scheibe 11 am nähesten kommen. Von der gegenüberliegenden Stirnseite 25 der Scheibe 11 stehen am Rand der Durchbrüche 16 an den Unterbrechungen der zylindrischen Wandabschnitte 17 Ansätze 26 und 27 hoch, in denen sich die Krümmung der Wandabschnitte 17 fortsetzt. Die radial innen liegenden Ansätze 26 sind als Rastfedern mit einer Rastnase 28 ausgebildet. An den schmalen Seiten der Durchbrüche 16 ragt von der Stirnseite 25 der Scheibe 11 jeweils eine Begrenzungswand 29 hoch.

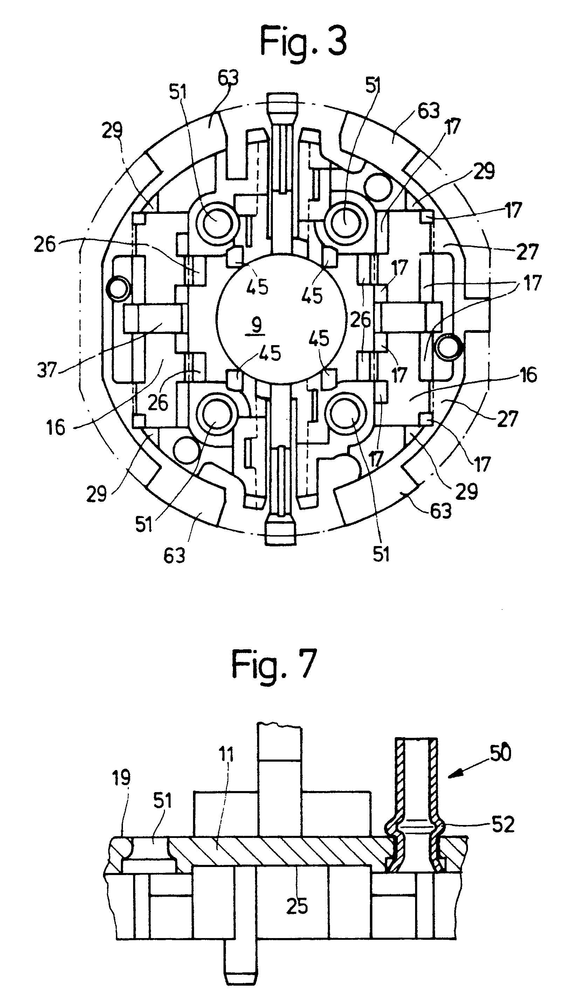

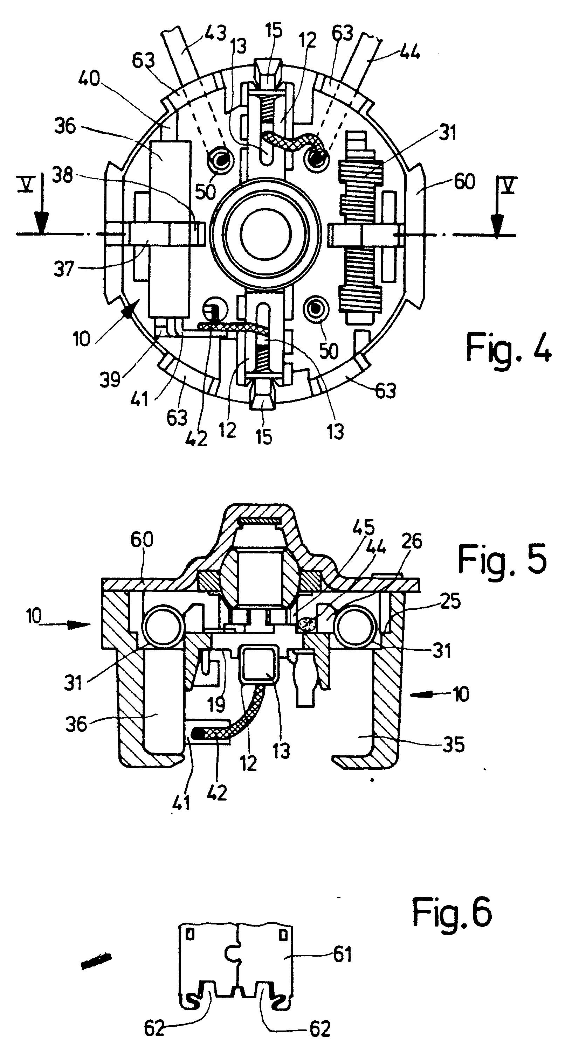

Die Durchbrüche 16 mit ihren Wandabschnitten 17 an ihren Längsseiten und mit den Wandabschnitten an den Schmalseiten sowie die Ansätze 26 und 27 und die Begrenzungswände 29 bilden jeweils eine Aufnahme 30 für eine Drossel 31, wie dies aus den Fig. 4 und 5 ersichtlich ist. Die erwähnten Abschnitte der Bürstentragplatte 10 sind dabei als Haltemittel für die Drossel 31 zu betrachten. Bei der Montage wird die Drossel in Richtung der Ansicht nach Fig. 3 in die Aufnahme 30 eingerastet. Die Wandabschnitte 17 wirken dabei als Anschläge in Montagerichtung. Senkrecht zur Montagerichtung ist die Drossel 31 in die eine Richtung ebenfalls durch die Wandabschnitte 17 und darüberhinaus durch die Ansätze 26 und 27 und in die andere Richtung durch die Schmalseiten eines Durchbruchs 16 und durch die Begrenzungswände 29 gesichert.

An der Bürstentragplatte 10 ist in axialer Richtung neben jeder Aufnahme 30 für eine Drossel 31 eine Aufnahme 35 für einen Thermoschalter 36 mit einem im wesentlichen quaderförmigen Gehäuse vorgesehen. Die Haltemittel, die eine Aufnahme 35 bilden, umfassen einen solchen Thermoschalter 36 an allen sechs Seiten. Als Grundfläche dient die Stirnseite 19 der Scheibe 11 an den Wandabschnitten 17 sowie an einem schmalen Streifen an den Schmalseiten eines Durchbruchs 16. Eine von der Stirnseite 19 hochstehende hakenförmige Haltezunge 37 begrenzt eine Aufnahme 35 an zwei Seiten. Ein weiterer Ansatz 38 an der Stirnseite 19 der Scheibe 11 bildet eine weitere Seite der Aufnahme 35. In der Nähe einer Schmalseite des Durchbruchs 16 ist an der Stirnseite 19 eine nicht federnde Rastnase 29 an die Scheibe 11 angeformt. Haltezunge 37 und Rastnase 39 haben in Längsrichtung der Durchbrüche 16 einen Abstand voneinander. An der gegenüberliegenden Stirnseite des Durchbruchs 16 befindet sich ein von der Stirnseite 19 der Scheibe 11 hochstehender Anschlag 40. Die Rastnase 39 und der Anschlag 40 begrenzen eine Aufnahme 35 an den restlichen beiden Seiten.

Bei der Montage wird ein Thermoschalter 36 in Längsrichtung eines Durchbruchs 16 über die Rastnase 39 zwischen die Haltezunge 37 und den Ansatz 38 bis zum Anschlag 40 hindurchgeschoben. Dabei federt die Haltezunge 37 aus, bis der Thermoschalter 36 die Rastnase 39 überquert hat. Wie deutlich aus den Fig. 4 und 5 ersichtlich, wird durch eine Anordnung einer Drossel 31 und eines Thermoschalters 36 axial nebeneinander in der Ebene der Bürstentragplatte 10 sehr viel Platz gewonnen.

In der in den Fig. 4 und 5 gezeigten Ausführung eines Elektromotors sind beide Aufnahmen 30 mit einer Drossel 31 belegt, während eine der Aufnahmen 35, die für Thermoschalter vorgesehen sind, nicht besetzt ist. Das liegt daran, daß in dieser speziellen Ausführung nur ein Thermoschalter notwendig ist und sich der Einsatz dieses einen Thermoschalters 36 in die Aufnahme 35, in der er sich jetzt befindet, angeboten hat, da einer seiner Anschlüsse 41 nun leicht mit der Litze 42 der einen Kohlebürste 13 verbunden werden konnte.

Die neu ausgebildete Bürstentragplatte kann also für verschiedene Ausführungen von elektrischen Maschinen verwendet werden, nämlich für elektrische Maschinen mit zwei Drosseln und zwei Thermoschaltern, für elektrische Maschinen mit zwei Drosseln und einem Thermoschalter, für elektrische Maschinen mit einer Drossel und zwei Thermoschaltern, usw. Unabhängig von der Anzahl der verwendeten elektrischen Bauteile erscheint es wesentlich, daß zwei in axialer Richtung nebeneinander angeordnete Aufnahmen für elektrische Bauteile vorhanden sind, selbst wenn nicht beide oder sogar keine der beiden Aufnahmen besetzt ist.

Die elektrischen Bauteile und die Kohlebürsten sind untereinander verdrahtet und können über die beiden Kabel 43 und 44 an eine äußere Stromquelle angeschlossen werden. Während das Kabel 43 nur einen kurzen Abschnitt auf der Bürstentragplatte 10 hat, legt das Kabel 44 eine größere Wegstrecke auf der Bürstentragplatte 10 zurück. Seine Lage wird durch einander gegenüberliegende Vorsprünge an der Tragplatte gesichert. Zwei dieser Vorsprünge werden durch die Ansätze 26 gebildet. Diesen gegenüber stehen zwei Säulen 45 von der Stirnfläche 25 der Scheibe 11 hoch. Da insgesamt vier Ansätze 26 vorhanden sind, gibt es auch vier Vorsprünge 45, so daß Kabel in verschiedenen Bereichen der Bürstentragplatte10 geführt werden können.

Die Verbindungen zwischen den einzelnen elektrischen Bauteilen, den Litzen 42 der Kohlebürsten 13 sowie den Kabeln 43 und 44, werden in Rohrniete 50 hergestellt, die in Bohrungen 51 der Scheibe 11 der Bürstentragplatte 10 eingesetzt sind. Die Form der Bohrungen 51 sowie ein in eine solche Bohrung eingesetzter Rohrniet sind in Fig. 7 besonders dargestellt. Die Bohrungen 51 sind auf der Seite 19 der Scheibe 11 enger als auf der Seite 25, wobei sie in einer abgerundeten Stufe von dem weiteren zu dem engeren Abschnitt übergehen. Ein Rohrniet 50, der bereits mit einer rundum laufenden Sicke 52 versehen ist, wird von der Seite 19 der Scheibe 11 aus in eine Bohrung 51 eingesetzt, bis die Sicke 52 gegen die Seite 19 stößt. Dann wird von der Seite 25 aus ein Werkzeug in den Rohrniet 50 eingeführt, das ihn im Bereich des weiteren Abschnitts der Bohrung 50 konisch erweitert, so daß er fest in der Scheibe 11 sitzt. Diese Art der Befestigung hat gegenüber der bisher üblichen Befestigung, bei der der Rohrniet über den Rand der Bohrung umgebördelt wird, den Vorteil, daß trotz der zum Teil größeren Bohrung auf der Scheibe 11 weniger Platz benötigt wird und der Rohrniet kürzer sein kann.

Die verschiedenen Anschlußdrähte werden üblicherweise dadurch miteinander verbunden, daß sie in einen Rohrniet eingeführt werden und dann der Rohrniet zusammengequetscht wird. Beim Zusammenquetschen stören die Leitungen nicht, wenn sie von der dem zu bearbeitenden Abschnitt des Rohrniets gegenüberliegenden Seite der Bürstentragplatte in den Rohrniet eingeführt werden, bei dem gezeigten Ausührungsbeispiel also von der Seite 25 der Scheibe 11 aus. Am günstigsten ist es natürlich, wenn alle in einem Rohrniet 50 befindlichen Drähte von dieser Seite aus in ihn eingeführt worden sind. Dies ist im gezeigten Ausführungsbeispiel nach den Fig. 4 und 5 bei zwei Rohrniete 50 geschehen.

Die in den Fig. 4 und 5 gezeigte Baueinheit aus einem Deckel 60 und einer Bürstentragplatte 10 wird bei der Montage eines Elektromotors mit dem Gehäusemantel 61 zusammengebaut, der in Fig. 6 in einem gegenüber den anderen Figuren verkleinerten Maßstab dargestellt ist. Um diesen Arbeitsgang zu vereinfachen, besitzt der Gehäusemantel 61 stirnseitig offene Aussparungen 62, die sich von ihrer offenen Seite aus nach innen konisch verjüngen. Diesen Aussparungen entsprechen konische Ansätze 63 an der Bürstentragplatte 10, die in die Aussparungen 62 eingreifen und somit die Baueinheit aus Deckel 60 und Bürstentragplatte 10 sowie den Gehäusemantel 61 bei der Montage über eine bestimmte Wegstrecke aneinanderführen.

**Ansprüche**

1. Tragplatte aus einem elektrisch isolierenden Material, insbesondere aus Kunststoff, die zum Einbau in einen Elektromotor mit einem innerhalb eines Gehäuses (60, 61) drehbar gelagerten Anker mit Kollektor vorgesehen ist und die zur Halterung von an dem Kollektor des Elektromotors schleifenden Bürsten (13) im wesentlichen senkrecht zur Drehachse des Ankers im Gehäuse (60, 61) angeordnet ist und Aufnahmen (30, 35) zur Befestigung von elektrischen Bauteilen, wie Drossel (31), Kondensator, Thermoschalter (36) aufweist, dadurch gekennzeichnet, daß zwei Aufnahmen (30, 35), senkrecht zur Tragplatte (10) betrachtet, übereinanderliegen, und daß sich die eine Aufnahme (30) auf der einen Seite (25) und die andere Aufnahme (35) auf der anderen Seite (19) der Tragplatte (10) befindet.

2. Tragplatte nach Anspruch 1, dadurch gekennzeichnet, daß sie in dem Bereich, in dem die beiden Bauteile (31,36) angeordnet sind, einen Durchbruch (16) aufweist, in dem die beiden Bauteile (31, 36) aneinander anliegen können.

3. Tragplatte nach Anspruch 1 oder 2, dadurch gekennzeichnet, daß die Aufnahmen (30, 35) für die elektrischen Bauteile (31, 36) durch Haltemittel (17, 26, 27, 29; 37, 38, 39, 40) gebildet sind.

4. Tragplatte nach Anspruch 3, dadurch gekennzeichnet, daß eines der Bauteile (31, 36) durch mindestens eine Rastnase (28, 39) und einen Anschlag (17, 40) in Montagerichtung gesichert ist.

5. Tragplatte nach Anspruch 4, dadurch gekennzeichnet, daß die Rastnase (39) fest an der Tragplatte (10) angeformt ist und daß das Bauteil (36) von einer federnden Haltezunge (37) übergriffen wird.

6. Tragplatte nach Anspruch 5, dadurch gekennzeichnet, daß sich die federnde Haltezunge (37), in Montagerichtung gesehen, in einem Abstand von der Rastnase (39) befindet.

7. Tragplatte nach einem der vorhergehenden Ansprüche, dadurch gekennzeichnet, daß eines der Bauteile (31, 36) senkrecht zur Montagerichtung durch Seitenwände (26, 27, 29; 37, 38) gesichert ist.

8. Tragplatte nach einem der Ansprüche 1 bis 7, dadurch gekennzeichnet, daß die beiden Aufnahmen (30, 35) für unterschiedliche Arten von elektrischen Bauteilen (31, 36) entsprechend verschieden voneinander ausgebildet sind.

9. Tragplatte nach einem der Ansprüche 1 bis 8, dadurch gekennzeichnet, daß zu jeder Aufnahme (30, 35) eine weitere Aufnahme (30, 35) zweizählig symmetrisch bezüglich der Plattenachse angeordnet ist.

## Claims

1. A bearing plate made of an electrically insulating material, especially of plastics, which bearing plate is provided for the assembly into an electric motor comprising an armature rotatably mounted within a housing (60, 61) with a commutator and which is substantially perpendicularly arranged with respect to the axis of rotation of the armature in the housing (60, 61) for holding brushes (13) gliding on the commutator of the electric motor and which comprises locations (30, 35) for fixing electric components, as for instance inductor (31), condensator, thermo switch (36), wherein two locations (30, 35), looked at in perpendicular direction to the bearing plate (10), lie above each other, and wherein the one location (30) is situated on the one side (25) and the other location (35) is situated on the other side (19) of the bearing plate (10).

2. A bearing plate according to claim 1, wherein in the area in which the two components (31, 36) are arranged it comprises an aperture (16) in which the two components (31, 36) may lie on each other.

3. A bearing plate according to claim 1 or 2, wherein the locations (30, 35) for the electric components (31, 36) are formed by means of holding elements (17, 26, 27, 29; 37, 38, 39, 40).

4. A bearing plate according to claim 3, wherein one of the components (31, 36) is secured by at least one ratchet lug (28, 39) and one stop (17, 40) in the direction of the assembly.

5. A bearing plate according to claim 4, wherein the ratchet lug (39) is firmly formed onto the bearing plate (10) and wherein the component (36) is gripped by the resilient locking lug (37).

6. A bearing plate according to claim 5, wherein the resilient locking lug (37), looked at in the direction of the assembly, is located at a certain distance of the ratchet lug (39).

7. A bearing plate according to one of the preceding claims, wherein one of the components (31, 36) is secured by side walls (26, 27, 29; 37, 38) perpendicularly to the direction of the assembly.

8. A bearing plate according to one of the claims 1 to 7, wherein the two locations (30, 35) provided for different sorts of electrical components (31, 36) are formed in a respectively different manner.

9. A bearing plate according to one of the claims 1 to 8, wherein with respect to each location (30, 35) another location (30, 35) is double-counting symmetrically arranged regarding the axis of the plate.

## Revendications

1. Plaque de support réalisée en un matériau électriquement isolant, notamment en matière plastique destinée à être montée dans un moteur électrique comportant un induit monté rotatif à l'intérieur d'un carter (60,61) et comportant un collecteur, et disposée sensiblement perpendiculairement à l'axe de rotation de l'induit dans le carter (60,61), pour le maintien de balais (13) glissant sur le collecteur du moteur électrique, et possédant des logements (30,35) permettant de fixer des composants électriques, comme par exemple une bobine (31), un condensateur, un thermo-rupteur (36), caractérisée en ce que deux logements (30,35) sont superposés, lorsqu'on regarde perpendiculairement à la plaque de support (10), et qu'un logement (30) est situé d'un côté (25) de la plaque de support (10) et que l'autre logement (35) est situé sur l'autre côté (19) de cette plaque.

2. Plaque de support selon la revendication 1, caractérisée en ce qu'elle possède, dans la zone dans laquelle sont disposés les deux composants (31,36), un passage traversant (16), dans lequel les deux composants (31,36) peuvent s'appliquer l'un contre l'autre.

3. Plaque de support selon la revendication 1 ou 2, caractérisée en ce que les logements (30,35) prévus pour les composants électriques (31,36) sont formés par des moyens de retenue (17,26,27,29;37,38,39,40).

4. Plaque de support selon la revendication 3, caractérisée en ce que l'un des composants (31,36) est bloqué, dans la direction de montage, par au moins un bec d'encliquetage (28,39) et une butée (17,40).

5. Plaque de support selon la revendication 4, caractérisée en ce que le bec d'encliquetage (39) est formé par moulage de façon fixe sur la plaque de support (10) et que le composant (36) est enserré par une languette élastique de retenue (37).

6. Plaque de support selon la revendication 5, caractérisée en ce que la languette élastique de retenue (37) est située, lorsqu'on regarde dans la direction de montage, à une certaine distance du bec d'encliquetage (39).

7. Plaque de support selon l'une des revendications précédentes, caractérisée en ce que l'un des composants (31,36) est bloqué perpendiculairement à la direction de montage, par des parois latérales (26,27,29; 37,38).

8. Plaque de support selon l'une des revendications 1 à 7, caractérisée en ce que les deux logements (30,35) prévus pour des types différents de composants électriques (31,36) sont agencés avec des formes correspondantes qui

différent l'une de l'autre.

9. Plaque de support selon l'une des revendications 1 à 8, caractérisée en ce qu'un autre logement (30, 35) est disposé en double d'une manière symétrique de chaque logement (30,35) par rapport à l'axe de la plaque.

Fig. 1

Fig. 2

# Fig. 3

# Fig. 7

Fig. 4

Fig. 5

Fig.6